# EUROPEAN PATENT APPLICATION

(11) **EP 1 312 538 A1**
(43) Date of publication of application: **21.05.2003**
(21) Application number: 02025730.9
(22) Date of filing: 15.11.2002
(51) Int. Cl.: B62D 55/06, B62D 55/065, B62D 51/00

(54) **Snowmobile**

(30) Priority: 20.11.2001 JP 2001354061
(71) Applicant: YAMAHA HATSUDOKI KABUSHIKI KAISHA, Iwata-shi Shizuoka-ken (JP)
(72) Inventor: Takahiko, Kubota, Iwata-Shi, Shizuoka-ken (JP)
(74) Representative: Grünecker, Kinkeldey, Stockmair & Schwanhäusser Anwaltssozietät

(57) **Abstract**

The invention relates to a snowmobile. It aims to provide a ski structure for a snowmobile that can generate a large side force to reduce the steering handle operating load.

Said target is performed by a snowmobile comprising a pair of skis (4) supporting a front part of a body of the snowmobile, each ski comprising a keel part (24) forming a lower portion thereof, wherein the transverse section of side walls (24a,24b) of the keel part (24) comprise bending points (p).

## Description

This invention relates to a snowmobile comprising a pair of skis for supporting a front part of a body of the snowmobile.

A snowmobile that runs on snow with an endless track belt driven by an engine mounted in the front part of the body is desirably maneuvered by turning a pair of skis that supports the front part of the body right and left by operation of a steering handle.

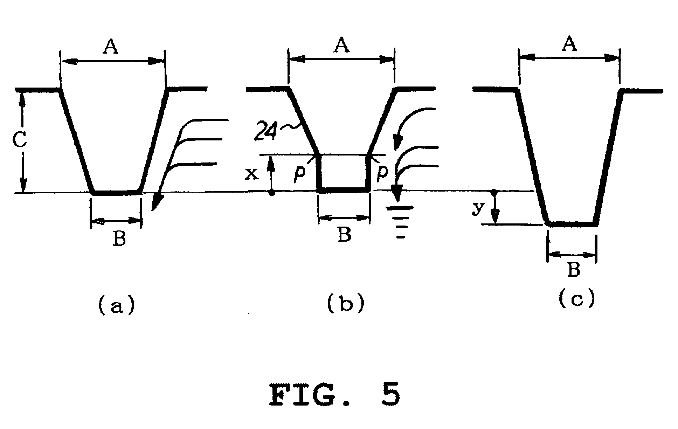

Fig. 5(a) shows a transverse cross-section of a keel part of a conventional ski. The conventional keel part has an inverse trapezoidal cross section, tapered downward.

In the case of a conventional ski with a keel part having a transverse cross-section as shown in Fig. 5(a), because snow pressed by a side force flows obliquely downward as shown by arrows in Fig. 5(a), no large side force is generated. This causes the ski to understeer and increases the steering handle operating load.

Therefore, it is an object of the invention to provide a snowmobile having a ski structure that can generate a larger side force such to reduce the steering handle operating load.

This objective is solved in an inventive manner by a snowmobile comprising a pair of skis supporting a front part of a body of the snowmobile, each ski comprising a keel part forming a lower portion thereof, wherein the transverse section of side walls of the keel part comprise bending points.

According to the present invention, snow that is pressed by a side force acting on the ski and flows obliquely downward along the side wall of the keel part changes its direction at the bending point. Because the snow does not flow obliquely downward, a large side force is generated. This prevents the ski from understeering even in new snow or deep snow and consequently decreases the steering handle operating load.

According to a preferred embodiment, said side walls comprise an upper portion being tapered downwardly from an upper horizontal surface of said keel part towards said bending points in its transverse section. Said side walls comprise a lower portion formed below said bending points having vertical surfaces in its transverse section or diverging surfaces in its transverse section.

According to another preferred embodiment, said bending points are arranged at points between said upper horizontal surface and a lower base surface of the keel part. Preferably, they are located at vertical mid-points of the side surfaces of the keel part. Said bending points are arc-shaped or have a shape of a sharp bend.

According to still another preferred embodiment, said keel part has a flat bottom surface. Said keel part may also have a groove formed along the length thereof in its bottom surface. An iron rod runner extends longitudinally in the groove of the keel part. Said keel part is made of a resin material.

According to another preferred embodiment, each of said skis comprise a saddle to the lower part of which said keel part is attached to and to the upper part of which the body of the snowmobile is connected to. Said saddle is made of an aluminum channel member. Pipe handles are attached at front parts of the skis.

In another preferred embodiment, the slope of the side surfaces of the keel part changes at said bending points. Said slope of said side surfaces is inwardly directed at an upper portion and vertically or outwardly oriented at a lower portion of said side surfaces of said keel part.

In the following, the present invention will be described in greater detail with reference to the accompanying drawings, wherein:
- Fig. 1: is a side view of a snowmobile having a ski part structure according to the present invention;
- Fig. 2: is a front view of the snowmobile having a ski part structure according to the present invention;
- Fig. 3: is a side view of a ski of the snowmobile;
- Fig. 4: is a cross-sectional view taken along the line IV-IV in Fig. 3;
- Fig. 5: illustrates transverse cross-sections of keel parts of various types of skis;
- Fig. 6: illustrates graphs showing how the side force and the handle operating load vary when the shape of the transverse cross-section of the keel part is changed; and
- Fig. 7: further transverse cross-sections of keel parts of further types of skis.

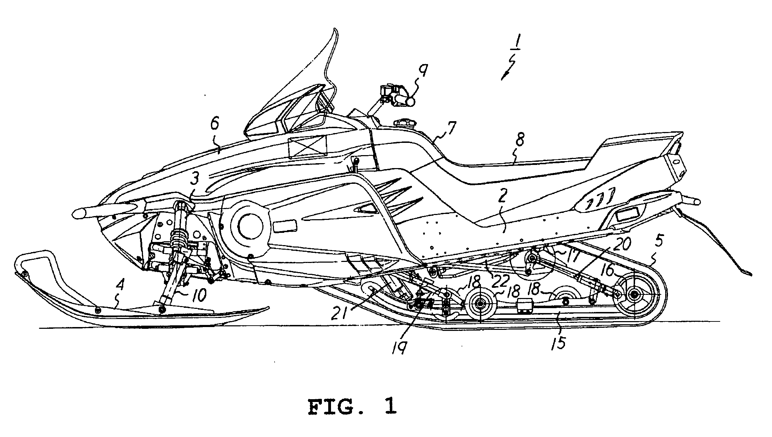

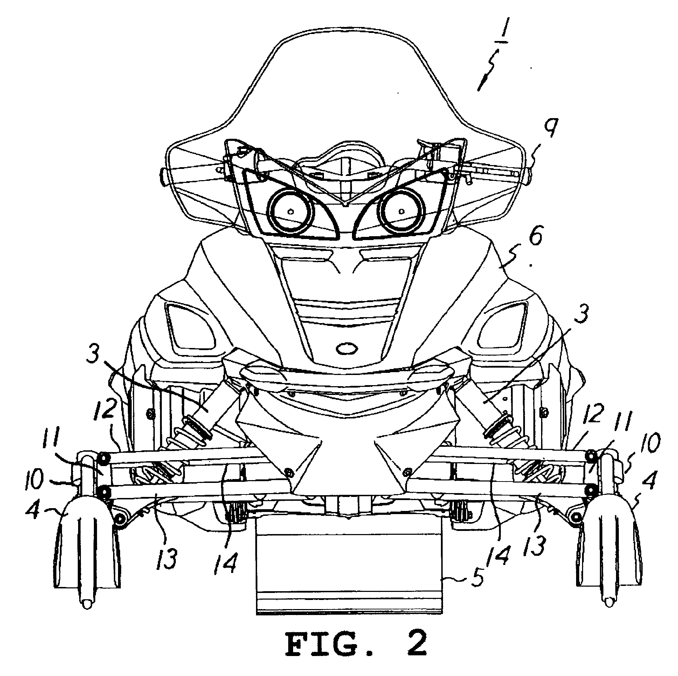

Fig. 1 is a side view of a snowmobile having a ski structure according to the present invention, and Fig. 2 is the front view of the snowmobile.

Designated as 1 is a snowmobile having a body frame 2 including a front part supported by a pair of right and left skies 4 via hydraulic dumpers 3. The snowmobile 1 has an endless track belt 5 placed in a rear part of the body frame 2.

The front half of the body frame 2 is covered with a cowling 6. In a space defined by the cowling 6, an engine (not shown) as a driving source is housed.

As shown in Fig. 1, a fuel tank 7 and a seat 8 are longitudinally arranged on the body frame 2.

Description will be now made of the constitution of a steering system in the snowmobile 1.

In the cowling 6, a steering shaft (not shown) extends obliquely upward and backward. The steering shaft has an upper end to which a handle 9 is secured and a lower end to which an arm (not shown) is secured.

Each of the paired right and left skis 4 has a column shaft (not shown) erected thereon and extending through an outer cylinder 10. Thereby, the skis 4 are supported for laterally pivotal movement. Each of the skis 4 is suspended from the body frame 2 by upper and lower links 12 and 13 pin-joined between a bracket 11 attached to an inside of the outer cylinder 10 and a bracket (not shown) attached to the body frame 2 and the hydraulic dumper 3 (see Fig. 2).

Each of the column shafts of the skis 4 extending through the outer cylinder 10 has an upper end which is secured to a steering arm (not shown) extending perpendicular to the column shaft. The steering arm and the arm secured to the lower end of the steering shaft (not shown) are connected by a tie rod 14 (see Fig. 2).

When the handle 9 is operated to rotate the steering shaft (not shown) right or left, the rotation of the steering shaft is transferred to the column shafts via the arm secured to the lower end of the steering shaft, the tie rods 14, and the steering arms (not shown) secured to the upper ends of the column shafts. Since the right and left column shafts are simultaneously rotated in the circumferential direction in the outer cylinders 10, the right and left skis 4 are rotated in the desired direction about the column shafts, and the snowmobile 1 is turned to the right or left.

Description will be next made of the constitution of a travel driving system of the snowmobile 1.

As shown in Fig. 1, the rear half of the body frame 2 is supported on a pair of right and left slide rails 15 suspended from the body frame 2 by a rear suspension. The slide rails 15 have lower surfaces for guiding the track belt 5 wound around a guide wheel 16 rotatably supported at the rear ends of the slide rails 15 and a driving sprocket (not shown) driven to rotate by the engine.

In Fig. 1, designated as 17 and 18 are idler wheels for guiding the track belt 5. The rear suspension for suspending the slide rails 15 from the body frame 2 comprises a link rod 19, a control rod 20 and hydraulic dampers 21 and 22.

When the engine (not shown) is driven, the rotation thereof is varied by a transmission (not shown) and transmitted to the driving sprocket. The driving sprocket is rotated at a desired speed and in turn rotates the track belt 5. Thereby, the snowmobile 1 runs on snow at a desired speed.

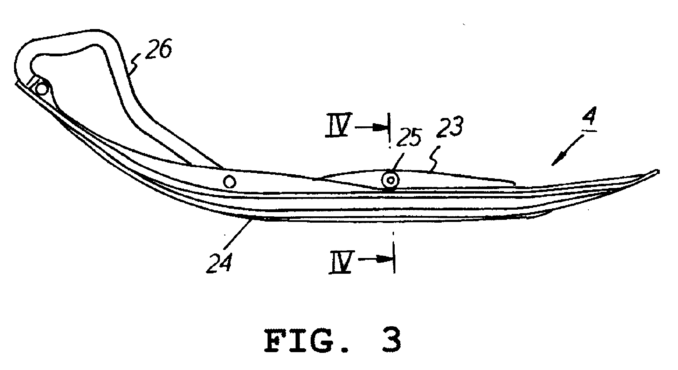

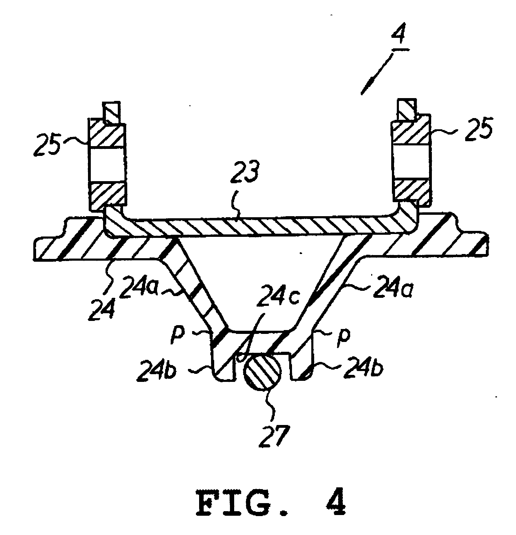

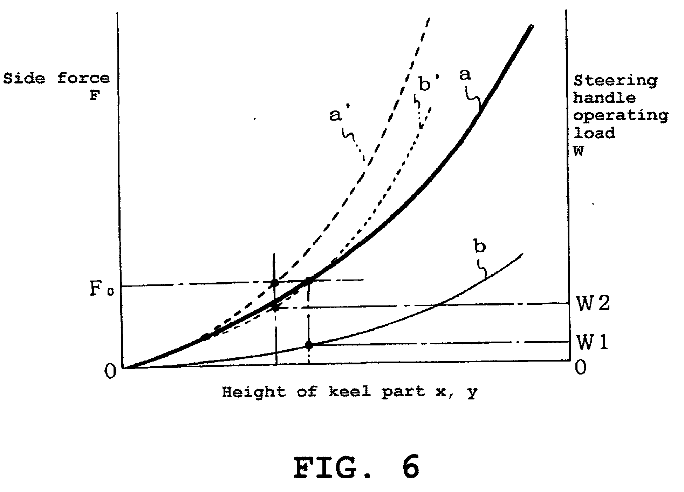

Description will be next made of a ski structure with reference to Fig. 3 to Fig. 6. Fig. 3 is a side view of a ski, Fig. 4 is a cross-sectional view taken along the line IV-IV in Fig. 3, Fig. 5 illustrates transverse cross-sections of keel parts of various types of skis, and Fig. 6 illustrates graphs showing how the side force and the steering handle operating load vary when the transverse cross-sectional shape of the keel part is changed. Because the right and left skis 4 have the same structure, the description will be made of one of the skis 4.

Each of the skis 4 comprises a saddle 23 of an aluminum channel member and a resin keel part 24 attached to a lower part of the saddle 23 and supported by the outer cylinder 10 (see Fig. 1 and Fig. 2) at the midpoint of its length for vertical pivotal movement. Namely, bushes 25 are fitted in the right and left side walls of the saddle 23 at opposed positions, and the ski 4 is supported at the midpoint by the outer cylinder 10 via shaft (not shown) extending through the bushes 25 for vertical pivotal movement.

Pipe handles 26 are attached at the front parts of the skis 4, so that the direction of the body can be changed with the handles 26.

In this embodiment, the keel part 24 of the ski 4 is so shaped as to have bending points p at vertical midpoints in a transverse cross-section. More specifically, on both sides of the keel part 24, taper surfaces 24a tapered downward are formed above the bending points p and parallel vertical surfaces 24b are formed below the bending points p. The keel part 24 has a bottom surface in which a groove 24c is formed along the length thereof, and an iron rod runner 27 extends longitudinally in the groove 24c.

Fig. 5(a), Fig. 5(b) and Fig. 5(c) schematically show a transverse cross-section of a conventional keel part, a transverse cross-section of the keel part according to the present invention, and a transverse cross-section of a keel part having a generally the same transverse cross-sectional shape as the conventional one but is increased in height to obtain an ideal side force, respectively. In the transverse cross-sectional views, A, B and C respectively represents the same length.

In the case of a ski with a conventional keel part having a transverse cross-section as shown in Fig. 5(a), since snow pressed by a side force flows obliquely downward as shown by the arrows in Fig. 5(a) as described before, no large side force is generated. This causes the ski to understeer and increases the handle operating load.

In the case of a ski with the keel part 24 of the present invention having a transverse cross-section as for example shown in Fig. 5(b) which pictures a first embodiment, snow which is pressed by a side force which acts on the ski 4 and flows obliquely downward along the side wall of the keel part 24 changes its direction at the bending point p as shown by the arrows in Fig. 5(b). Since the snow does not flow obliquely downward, a large side force is generated. This prevents the ski from understeering even in new snow or deep snow and consequently decreases the steering handle operating load.

The relation between the height x of the bending points p and the side force F, and the relation between the height x of the bending points p and the steering handle operating load W are represented by solid line curves "a" and "b", respectively, in Fig. 6. The steering handle operating load W at the time when the optimum side force F₀ can be obtained takes a low value W1 as shown in Fig. 6. This means that the handle can be operated easily.

In the case of a ski with a keel part having a transverse cross-section as shown in Fig. 5(c), the relation between the length y (the downwardly extended length) and the side force F and the relation between the length y and the steering handle operating load W are represented by broken-line curves "a"' and "b"', respectively, in Fig. 6. The steering handle operating load W at the time when the optimum side force F₀ can be obtained takes a large value W2 (> W1) as shown in Fig. 6. This means the steering handle is heavy to maneuver. In addition, since the volume of the keel part is so large that the material cost increases.

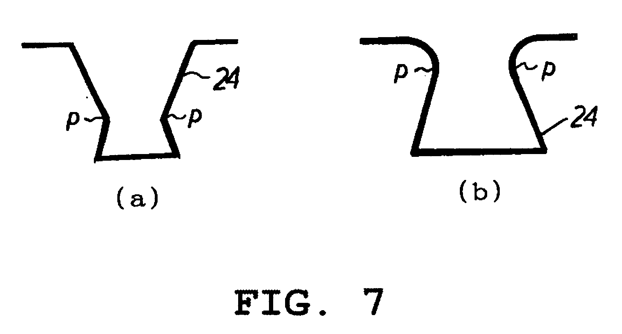

As has been described above, according the first embodiment of the present invention, a large side force can be generated to reduce the steering handle operating load. The transverse cross-section of the keel part 24 is not limited to the one in this embodiment. The keel part 24 may be of another cross section having bending points p at vertical midpoint as shown in Fig. 7(a) or (b) according to a second and third embodiment.

At any of the possible embodiments, the bending point p is not limited to the vertical midpoint between the base and the upper (horizontal) surface of the keel part 24. The bending point may be arranged at any position above the lowermost point of the lower base and the uppermost position of the side surfaces of the keel part 24 next to the horizontal top surface. Thereby, the lower base of the keel part 24 may be formed having a flat horizontal surface as pictured in figures 5 and 7, but may also have a curved or structured surface forming a groove 24c.

Preferably, the bending point p is located in the lower half, in particular at one/third or one/fourth of the total height C of the side surfaces of the keel part 24. As it is pictured in figures 4, 5b, right below the horizontal top surface of the keel part and adjacent thereto, an inwardly tapered surface 24a is symmetrically arranged to a vertical center plane dividing the ski 4 into a right half and a left half thereof. Via the bending point p, a vertical surface 24b is arranged on the lower side of the tapered surface 24a as pictured in figures 4 and 5b. Alternatively to this vertical surface 24b, also an outwardly tapered surface may be arranged below said bending point p and adjacent to said inwardly tapered surface 24a. While the upper portion 24a has preferably an inverse trapezoidal cross-section, the lower portion 24b may have a rectangular or a regular trapezoidal cross-section.

As pictured in figure 7b, the bending point may also be arranged right next to the horizontal flat top surface of the keel part 24. As shown in figure 7b, an outwardly tapered surface forming the side surface of the keel part 24 may be formed below said bending point p.

In any embodiment, the bending point p is not limited to actually being a point but the bending point p may also be formed as a section of a circle the radius of which is preferably one/fourth to one/third of the total height of the side surfaces of the keel part 24. Alternatively, the bending point may also be formed in a sharp bend. The edges connecting the side surfaces with the base surface of the keel part may be rounded as shown in figure 4 but may also have a sharp bend as shown in figures 7a and 7b.

In one embodiment, the lower portion 24b falls below said bending points p and has divergent surfaces in its transverse section. In another embodiment, the upper portion 24a of said side walls of said keel part 24 is comprised of an upper arc portion of said bending points only, meaning set from the upper horizontal surface a lower portion 24b having diverging surfaces is divided only by a relatively large arc-shaped bending point.

As is clear from the above description, according to the present invention, there can be obtained the following effect; In a snowmobile which is maneuvered by rotating a pair of skis supporting a front part of a body thereof by operation of a steering handle, since each of the pair of skis has a keel part which forms a lower part thereof and which has a transverse cross-section having bending points at vertical midpoints thereof, a large side force can be generated to reduce the steering handle operating load.

In other words, snow that is pressed by a side force acting on the ski 4 and flows obliquely downward along the side wall of the keel part 24 changes its direction at the bending point. Because the snow does not flow obliquely downward, a large side force is generated. This prevents the ski 4 from understeering even in new snow or deep snow and consequently decreases the steering handle operating load.

This is accomplished in a snowmobile maneuvered by rotating a pair of right and left skis 4 supporting a front part of a body thereof by operation of a steering handle, each of the skis 4 has a keel part 24 that forms a lower part thereof and that has a transverse cross-section having bending points p at vertical midpoints thereof.

The invention relates to a snowmobile. It aims to provide a ski structure for a snowmobile that can generate a large side force to reduce the steering handle operating load.

Said target is performed by a snowmobile comprising a pair of skis supporting a front part of a body of the snowmobile, each ski comprising a keel part forming a lower portion thereof, wherein the transverse section of side walls of the keel part comprise bending points.

## Claims

1. Snowmobile comprising a pair of skis (4) supporting a front part of a body of the snowmobile (1), each ski (4) comprising a keel part (24) forming a lower portion thereof, wherein the transverse section of side walls (24a,24b) of the keel part (24) comprise bending points (p).

2. Snowmobile according to claim 1, **characterized in that** said side walls comprise an upper portion (24a) being tapered downwardly from an upper horizontal surface of said keel part (24) towards said bending points (p) in its transverse section.

3. Snowmobile according to claim 1 or 2, **characterized in that** said side walls comprise a lower portion (24b) formed below said bending points (p) having vertical surfaces in its transverse section.

4. Snowmobile according to claim 1 or 2, **characterized in that** said side walls comprise a lower portion (24b) formed below said bending points (p) having diverging surfaces in its transverse section.

5. Snowmobile according to at least one of the claims 2 to 4, **characterized in that** said bending points (p) are arranged at points between said upper horizontal surface and a lower base surface of the keel part (24).

6. Snowmobile according to claim 5, **characterized in that** said bending points (p) are located at vertical mid-points of the side surfaces of the keel part (24).

7. Snowmobile according to at least one of the claims 1 to 6, **characterized in that** said bending points (p) are arc-shaped.

8. Snowmobile according to at least one of the claims 1 to 6, **characterized in that** said bending points (p) have a shape of a sharp bend.

9. Snowmobile according to at least one of the claims 1 to 8, **characterized in that** said keel part (24) has a flat bottom surface.

10. Snowmobile according to at least one of the claims 1 to 8, **characterized in that** said keel part (24) has a groove (24c) formed along the length thereof in its bottom surface.

11. Snowmobile according to claim 10, **characterized in that** an iron rod runner (27) extends longitudinally in the groove (24c) of the keel part (24).

12. Snowmobile according to at least one of the claims 1 to 11, **characterized in that** said keel part (24) is made of a resin material.

13. Snowmobile according to at least one of the claims 1 to 12, **characterized in that** each of said skis comprise a saddle (23) to the lower part of which said keel part (24) is attached to and to the upper part of which the body of the snowmobile (1) is connected to.

14. Snowmobile according to claim 13, **characterized in that** said saddle is made of an aluminum channel member.

15. Snowmobile according to at least one of the claims 1 to 14, **characterized in that** pipe handles (26) are attached at front parts of the skis (4).

16. Snowmobile according to at least one of the claims 1 to 15, **characterized in that** the slope of the side surfaces of the keel part (24) changes at said bending points (p).

17. Snowmobile according to claim 16, **characterized in that** said slope of said side surfaces is inwardly directed at an upper portion (24a) and vertically or outwardly oriented at a lower portion (24b) of said side surfaces of said keel part (24).
